# EUROPEAN PATENT APPLICATION

(11) **EP 3 159 501 A1**
(43) Date of publication of application: **26.04.2017**
(21) Application number: 15190768.0
(22) Date of filing: 21.10.2015
(51) Int. Cl.: F01D 25/24, F01D 25/30, F02K 1/80

(54) **FLOW ENGINE COMPRISING AN OUTLET ARRANGEMENT**

(71) Applicant: Siemens Aktiengesellschaft, 80333 München (DE)
(72) Inventor: BRATHWAITE, Adrian, South Hykeham, Lincoln, LN6 9UG (GB)
(74) Representative: Maier, Daniel Oliver

(57) **Abstract**

The present invention relates to a flow engine (10) comprising an outlet arrangement (12) with a diffuser arrangement (14) comprising a diffuser section (16) and with an exhaust arrangement (18) comprising a cone section (20) and a collector box (22).

In order to provide a serviceable arrangement it is proposed that at least two parts (16, 20, 22) of the tree parts (16, 20, 22) of the outlet arrangement (12) are connected to one another by at least two removable connections (24, 26, 26').

## Description

### Field of the Invention

The present invention relates to a flow engine comprising an outlet arrangement with a diffuser arrangement comprising a diffuser section and with an exhaust arrangement comprising a cone section and a collector box. The present invention further relates to methods for de-assembling or assembling said outlet arrangement of the flow engine.

### Background to the Invention

Modern turbines often operate at extremely high temperatures, pressure or speed. The effect of high temperature e.g. of the exhaust gases on the turbine components can be detrimental to the efficient operation of the turbine and can, in extreme circumstances, lead to distortion and possible failure of such components. Furthermore, these detrimental effects can be different depending on the location of the component in respect to the influencing factor. For example components being arranged in a flow path of the combustion gases in flow direction more upstream than other components may be affected more by high temperatures of those gases than the downstream components.

Moreover, turbine engines are used in various applications and throughout the world. Generally, the manufacturing of the turbine engine parts took place at different locations and often selected pieces are produced or manufactures at plants specialised to produce just a small selection of different parts. The final assembly stages of the whole turbine engine are done on-side where the plant is run. Consequently, to provide easy delivery and transport of the turbine parts small sizes of the pieces are preferred and advantageous because of the reduced risk to damage the goods.

Current designs use for example a diffuser arrangement with permanently joint parts to ensure proper fastening and reliable operation. Furthermore, assembly may be done at plants experienced in the assembly and sophisticated complex assembling methods can be used. However, in case of defects or failure of parts of the arrangement the whole arrangement had to be replaced. This is not only complex but also expensive and a waste of worktime and money.

It is a first objective of the present invention to provide a flow engine comprising an outlet arrangement with which the above-mentioned shortcomings can be mitigated, and especially, a more serviceable arrangement compared to state of the art systems can be provided.

It is a second objective of the invention to provide a method for de-assembling the outlet arrangement of the flow engine that provides a quick and uncomplex de-assembling process. Furthermore, it is a third objective of the invention to provide a method for assembling the outlet arrangement of the flow engine that is easy to perform.

### Summary of the Invention

Accordingly, the present invention provides a flow engine comprising an outlet arrangement with a diffuser arrangement comprising a diffuser section and with an exhaust arrangement comprising a cone section and a collector box.

It is provided that at least two parts of the tree parts of the outlet arrangement are connected to one another by at least one removable connections.

Due to the inventive matter selected parts of the arrangement can be easily removed and repaired or replaced if needed. Moreover, where there are transportation limitations in place, say for movement of a fully assembled whole engine, the use of the inventive arrangement can be used to break up the component into easier to transport pieces, for assembly at site or in a workshop. Consequently, the invention provided an improved serviceability compared with state of the art designs.

Even if a term like outlet arrangement, section, box, connection, clamp, joint, segment and cone is used in the singular or in a specific numeral form in the claims and the specification the scope of the patent (application) should not be restricted to the singular or the specific numeral form. It should also lie in the scope of the invention to have more than one or a plurality of the above mentioned structure(s).

In this context a flow engine is intended to mean any engine or machine suitable for a person skilled in the art, e.g. a thermal heating plant, a gas turbine or an internal combustion engine. Moreover, an outlet arrangement is intended to mean any arrangement with the purpose to provide an outlet for a fluid, like combustion gas, a working medium, like air, a cooling medium etc. This arrangement can be positioned in any location of the flow engine feasible for a person skilled in the art and especially in the flow path of a working fluid or gas of the flow engine. Thus, the arrangement can be positioned between functional sections of the flow engine and can be the outlet of one of those sections, like the turbine or the compressor section. Preferably, it is the outlet section of the whole plant to provide an outlet for the combustion gases of the plant.

The outlet arrangement comprises different functional sections, which in turn can comprise different pieces. However, the outlet arrangement comprises at least a diffuser arrangement and an exhaust arrangement. In this context a diffuser arrangement is intended to mean an arrangement that primarily provides or determines a flow path for the flow medium. To provide different characteristics of the flow path the diffuser arrangement may comprise different sections or pieces or (a) group(s) of pieces. Thus, the diffuser arrangement comprises a diffuser section.

The diffuser section or structure has the function of forming a channel for the flow turbine gases as well as providing structural support to a bearing housing. The diffuser section is basically a circular ring positioned around an axis of the flow engine and extending in tube-like fashion along an axis of the flow engine. The diffuser structure may be formed either by casting or fabrication. In this context an exhaust arrangement is intended to mean an arrangement that assists an exhaustion of the flow medium, for example by providing a selected path or direction thereof or by providing a structure to collect the flow medium.

The exhaust arrangement comprises at least one cone section and a collector box. The cone section is provided to build a channel for the diversion of the turbine gases from a horizontal direction (diffuser section, basically coaxial to the axis) into a radial direction (basically perpendicular to the axis). The cone section may also be oriented 90 degrees left or right, when rotated around the gas turbine centreline. Moreover, the cone section may be connected to other downstream ductwork. The cone section or pieces thereof are usually fabricated. Furthermore, the cone section comprises at least an inner and an outer cone. The inner and outer cones together form a tubular channel, which function is to guide the flow gases into the collector box. The channel extends basically in parallel or axially to the centreline of the flow engine. For example, an inclination against a horizontal line would typically be less than 45°. The opening of area between the inner and outer cone is often less than 15°. The terms "outer" and "inner" refer to the positioning of the cone half in respect to the axis of the flow engine. Moreover, the inner and outer cones are arranged basically coaxially towards each other. The formed channel extends not only axially along but also circumferentially around the axis of the flow engine. Thus a part of the channel forms an annulus-like structure.

The collector box or structure collects the flow medium beforehand of it exiting the flow engine. The collector box is basically a functional extension of the cone section or its cones. The collector box has a torus-like shape, with the hole a little out of centre to allow an increasing flow area for the gas that is added from one side of the hole, e.g. a bottom, to an outlet at an opposed side of the hole, hence the top. Consequently, at the very bottom the flow starts from "zero" to reach 50% of total on each side as the 180 degree sector is swept. The outlet at the top itself is typically a rectangular (or even oval on some designs) extension to the torus-like shape.).

The tree parts to be connected or specially, the tree parts of which two each are connected with each other are the diffuser section, the cone section and the collector box. In this context a removable connection is intended to mean any connection feasible for a person in the art that can be removed or dissolved, like, a connection by bolting, screwing, clamping, a force or form fit, a connection due to magnetic, electrical or adhesive forces etc. Moreover, the term "removable" should be understood as a separation of at least two pieces or parts, wherein at least one of the parts or pieces remains its integrity or functionality after the separation. In other words, at least one of the parts or pieces is not damaged or restricted in its function due to the separation. However, the part or piece may be damaged or may be in need of replacement due to other factors having caused damage to the part or piece or having influenced its integrity or functionality.

In a preferred embodiment of the invention the diffuser section and the cone section are connected to one another by at least one removable connection. Hence, the diffuser section can be removed quickly. Preferably, the removable connection is a bolting connection. It is further proposed, that the cone section and the collector box are connected to one another by at least two removable connections. Thus, the cone section can be removed easily and the outer and inner cones can be removed separately from one another.

Advantageously, the at least one removable connection is a V-clamp. Thus, the pieces can be secured reliably by a well-known device. According to a further and preferred embodiment of the invention the at least one removable connection is a flanged joint. Due to this a strong bond can be established. Beneficially, the at least one removable connection is an expansion joint. This provides a relief of thermal stresses and movements. Moreover, this allows the movement of the upstream components to be compensated for within the outlet arrangement. In other words, the expansion joint compensates for the thermal movements of the diffuser section and the inner and outer cones. The expansion joint may have any design feasible for a person skilled in the art and will be selected by the person skilled in the art according to his knowledge and the needs of the flow engine. Advantageously, the inner and outer cones are connected to the expansion joints by a series of bolts.

Preferably, the cone section comprises at least a deflective segment to direct the flow of flow medium constructively easy. According to a further realisation of the invention the at least one removable connection connecting the cone section with the diffuser section is positioned upstream of the deflective segment. Hence, an access to the connecting area is unhindered making an assembling and de-assembling process comfortable. According to a further aspect of the invention the at least one removable connection connecting the cone section with the collector box is positioned downstream of the deflective segment. Thus, the removable connection has enough operational space as well as a big enough area for assembly and de-assembly. The location of the the at least one removable connection or e.g. its flanges is also closely linked to the assembly and disassembly sequence. If the diameter is wrong or the connection sits in the wrong location it becomes more difficult and even impossible to take the assembly apart. Moreover, a disturbance of the flow inside the outlet arrangement should be as little as possible as obstructions would affect the performance of the flow engine or the gas turbine, respectively.

Furthermore, the the at least one removable connection is positioned outside of the formed channel. Hence, the removable connection can be easily reached from the outside simplifying the assembly or de-assembly. Moreover, parts of the connection may be protected from detrimental effects. For example, some parts of the connection may also be less resilient to high temperatures or high "winds" (from the hot gases) if placed on the inside of e.g. the collector box.

The invention further relates to a method for de-assembling an outlet arrangement of a flow engine, comprising a diffuser arrangement having a diffuser section and an exhaust arrangement having a cone section and a collector box.

It is proposed that the method comprises at least the steps of: dis-connecting at least one removable connection between the diffuser section and the cone section, removing the diffuser section from the cone section, dis-connecting at least two removable connections between the cone section and the collector box, removing an outer cone of the cone section from the connector box and removing an inner cone of the cone section from the connector box.

Due to the inventive method an improved de-assembly compared to state of the art systems can be provided. Moreover, due to the removable connections smaller structures can be provided that are easier to dis-assemble, to handle and to transport. The invention further relates to a method for assembling an outlet arrangement of a flow engine, comprising a diffuser arrangement having a diffuser section and an exhaust arrangement having a cone section and a collector box

It is proposed that the method comprises at least the steps of: positioning an inner cone of the cone section at the connector box, positioning an outer cone of the cone section at the connector box, connecting the inner cone and the outer cone of the cone section to the collector box by establishing at least two removable connections between the cone section and the collector box, positioning the diffuser section at the cone section and connecting the diffuser section to the cone section by establishing at least one removable connection between the diffuser section and the cone section.

The inventive method facilitates or improves the assembly of the outlet arrangement compared to known systems. Furthermore, due to the removable connections, smaller pieces can be used that can be assembled on side. Thus, transportation limitations are reduced and the handling is easier compared with larger state of the art pieces.

### Brief Description of the Drawings

The above mentioned attributes and other features and advantages of this invention and the manner of attaining them will become more apparent and the invention itself will be better understood by reference to the following description of embodiments of the invention taken in conjunction with the accompanying drawings, wherein
- FIG 1:: shows a schematically and sectional view of a gas turbine engine comprising an inventive outlet arrangement,
- FIG 2:: shows schematically the outlet arrangement from FIG 1 with an diffuser arrangement and an exhaust arrangement in an assembled state, FIG 3: shows schematically the outlet arrangement from FIG 2 after the dis-connection of a removable connection between a diffuser section and a cone section,
- FIG 4:: shows schematically the exhaust arrangement from FIG 2 with a cone section and a collector box after the removal of the diffuser section,
- FIG 5: shows schematically the exhaust arrangement from FIG 4 after the dis-connection of two removable connections between the cone section and the collector box,
- FIG 6:: shows schematically the exhaust arrangement from FIG 2 after the removal of an outer cone of the cone section and
- FIG 7: shows schematically the exhaust arrangement from FIG 2 after the removal of an inner cone of the cone section.

### Detailed Description of the Illustrated Embodiments

The present invention is described with reference to the above exemplary turbine engine having a single shaft or spool connecting a single, multi-stage compressor and a single, one or more stage turbine. However, it should be appreciated that the present invention is equally applicable to two or three shaft engines and which can be used for industrial, aero or marine applications. The terms upstream and downstream refer to the flow direction of the airflow and/or working gas flow through the engine 10 unless otherwise stated. The terms forward and rearward refer to the general flow of gas through the engine 10. If used in context to the engine 10, the terms axial, radial and circumferential are made with reference to a rotational axis 48 of the engine 10.

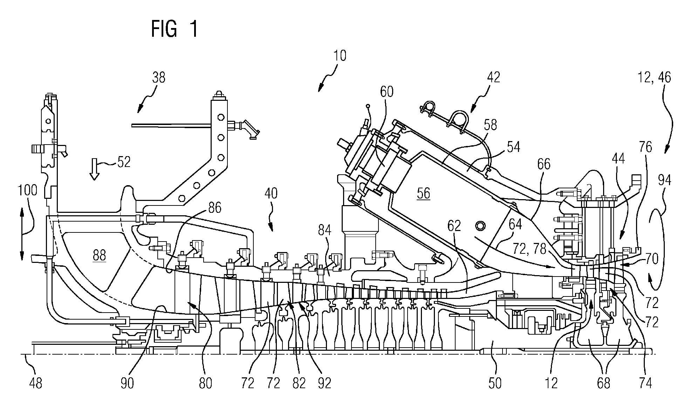

FIG 1 shows an example of a flow engine 10 in the case of a gas turbine engine 10 in a sectional view. The gas turbine engine 10 comprises, in flow series, an inlet 38, a compressor section 40, a combustion section 42, a turbine section 44 and an outlet section 46 with an outlet arrangement 12 (not shown in detail), which are generally arranged in flow series and generally in the direction of a longitudinal or rotational axis 48. The gas turbine engine 10 further comprises a shaft 50 which is rotatable about the rotational axis 48 and which extends longitudinally through the gas turbine engine 10. The shaft 50 drivingly connects the turbine section 44 to the compressor section 40.

In operation of the gas turbine engine 10, air 52, which is taken in through the air inlet 38 is compressed by the compressor section 40 and delivered to the combustion section or burner section 42. The burner section 42 comprises a burner plenum 54, one or more combustion chambers 56 defined by a double wall can 58 and at least one burner 60 fixed to each combustion chamber 56. The combustion chambers 56 and the burners 60 are located inside the burner plenum 54. The compressed air passing through the compressor section 40 enters a diffuser 62 and is discharged from the diffuser 60 into the burner plenum 54 from where a portion of the air enters the burner 60 and is mixed with a gaseous or liquid fuel. The air/fuel mixture is then burned and the combustion gas 64 or working gas from the combustion is channelled to the turbine section 44 via a transition duct 66.

This exemplary gas turbine engine 10 has a cannular combustor section arrangement 42, which is constituted by an annular array of combustor cans 58 each having the burner 60 and the combustion chamber 56, the transition duct 66 has a generally circular inlet that interfaces with the combustor chamber 56 and an outlet in the form of an annular segment. An annular array of transition duct outlets form an annulus for channelling the combustion gases 64 to the turbine section 44.

The turbine section 44 comprises a number of blade carrying discs 68 or turbine wheels 70 attached to the shaft 50. In the present example, the turbine section 44 comprises two discs 68 each carry an annular array of turbine assemblies, which each comprises an aerofoil 72 embodied as a turbine blade. However, the number of blade carrying discs 68 could be different, i.e. only one disc 68 or more than two discs 68. In addition, turbine cascades 74 are disposed between the turbine blades. Each turbine cascade 74 carries an annular array of turbine assemblies, which each comprises an aerofoil 72 in the form of guiding vanes, which are fixed to a stator 76 of the gas turbine engine 10. Between the exit of the combustion chamber 56 and the leading turbine blades inlet guiding vanes or nozzle guide vanes 78 are provided and turn the flow of working gas 64 onto the turbine blades.

The combustion gas 64 from the combustion chamber 56 enters the turbine section 44 and drives the turbine blades which in turn rotate the shaft 50. The guiding vanes 78 serve to optimise the angle of the combustion or working gas646 on to the turbine blades. The turbine section 44 drives the compressor section 40.

The compressor section 40 comprises an axial series of guide vane stages 80 and rotor blade stages 82 with turbine assemblies comprising aerofoils 72 or turbine blades or vanes, respectively. The rotor blade stages 82 comprise a rotor disc supporting an annular array of blades. The compressor section 40 also comprises a stationary casing 84 that surrounds the rotor stages 82 and supports the vane stages 80. The guide vane stages 80 include an annular array of radially extending vanes that are mounted to the casing 84. The vanes are provided to present gas flow at an optimal angle for the blades at a given engine operational point. Some of the guide vane stages 80 have variable vanes, where the angle of the vanes, about their own longitudinal axis, can be adjusted for angle according to air flow characteristics that can occur at different engine operations conditions

The casing 84 defines a radially outer surface 86 of the passage 88 of the compressor section 40. A radially inner surface 90 of the passage 88 is at least partly defined by a rotor drum 92 of the rotor which is partly defined by the annular array of blades.

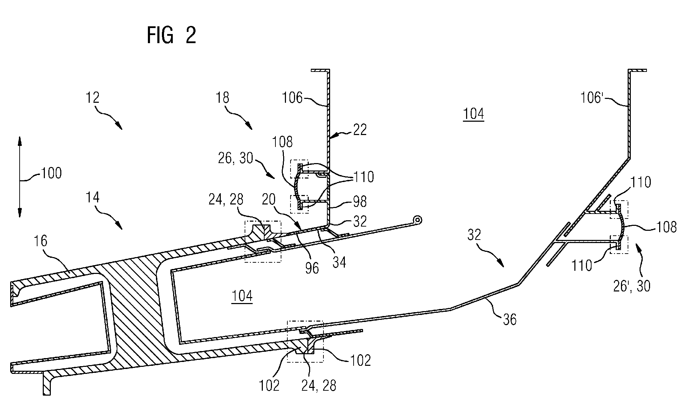

FIG 2 shows schematically the outlet arrangement 12 of the outlet section 46 of the flow engine 10. The outlet arrangement 12 comprises a diffuser arrangement 14 and an exhaust arrangement 18 arranged in flow series of the combustion gas 64 one after the other. The diffuser arrangement 14 comprises a tubular diffuser section 16 arranged in circumferential direction 94 around the shaft 50. And the exhaust arrangement 18 comprises a cone section 20 and a collector box 22. The cone section comprises two deflective segments 32 and thus a basically coaxial part 96 and a radial part 98. The coaxial part 96 is basically an extension to the diffuser section 16 and the radial part 98 to the collector box 22. Hence the cone section 20 deflects the direction of the flow medium (combustion gas 64) from a basically coaxial direction in to a radial direction 100.

In each case two parts 16, 20, 22 of the three parts 16, 20, 22 of the outlet arrangement 12, namely, the diffuser section 16, the cone section 20 and the collector box 22, are connected to one another by at least one removable connection 24, 26, 26' (see framed sections in FIG 2). Specifically, the diffuser section 16 and the cone section 20 are connected to one another by one removable connection 24 that is embodied as a flanged joint 28. Adjacently connected flanges 102 of the flanged joint 28 (one connected with the diffuser section 16 the other with the cone section 20) are bolted together by several bolts (not shown in detail). Moreover, the flanges 102 and thus the bolts are arranged outside of a built channel 104. The removable connection 24 connecting the cone section 20 with the diffuser section 16 is positioned in flow direction of the combustion gas 64 upstream of the deflective segment 32.

Moreover, the cone section 20 and the collector box 22 are connected to one another by two removable connections 26, 26'. The cone section 20 comprises an outer cone 34 and an inner cone 36. Specifically, the outer cone 34 is connected by one expansion joint 30 with an outer wall 106 of the collector box 22 and the inner cone 36 is connected by the other expansion joint 30 to the inner wall 106' of the collector box 22. Both removable connections 26, 26' connecting the cone section 20 with the collector box 22 are positioned in flow direction of the combustion gas 64 downstream of the deflective segment 32.

Each removable connection 26, 26' is embodied as an expansion joint 30. Furthermore, a resilient part 108 of the expansion joint 30 is bolted to two flanges 110 of the expansion joint 30, wherein one flange 110 is positioned at the inner or outer cone 34, 36 and the other flange 110 at the inner and outer wall 106, 106' of the collector box 22 (see the two framed sections per expansion joint 30). To protect the expansion joint 30 or parts thereof, like the resilient part 108, the expansion joints 30 are positioned outside of the formed channel 104 and thus away from detrimental gases.

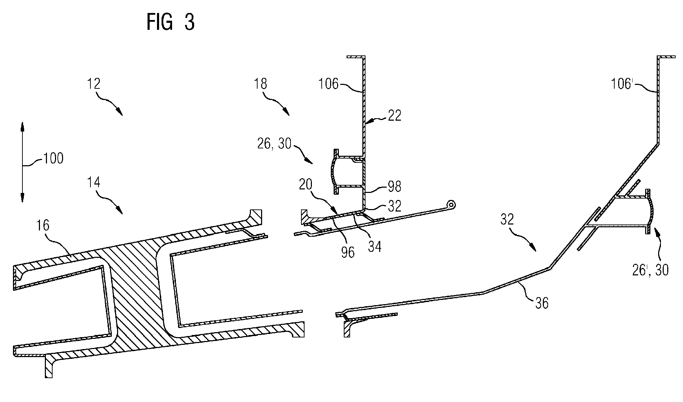

A dis-assembly sequence of the outlet arrangement 10 will be described in the following passages in reference to FIG 3 to 7.

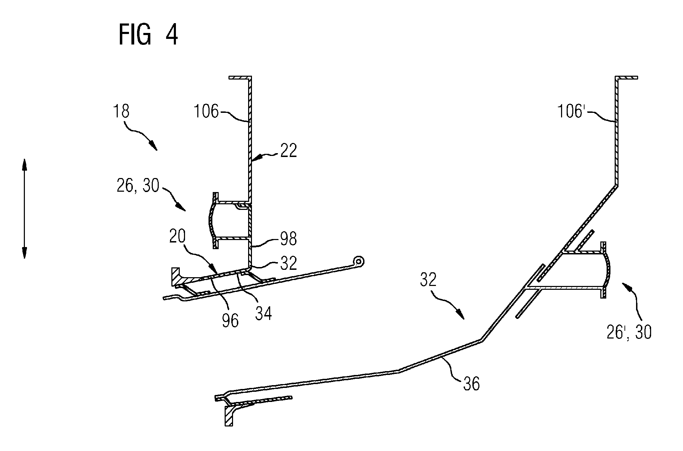

In a first step, the removable connection 24 between the diffuser section 16 and the cone section 20 is dis-connected. Hence, the bolts of the flanged joint 28 are removed. Subsequently, the diffuser section 16 can be removed from the cone section 20. This can be seen in FIG 3. FIG 4 shows the remaining exhaust arrangement 18 *in situ.*

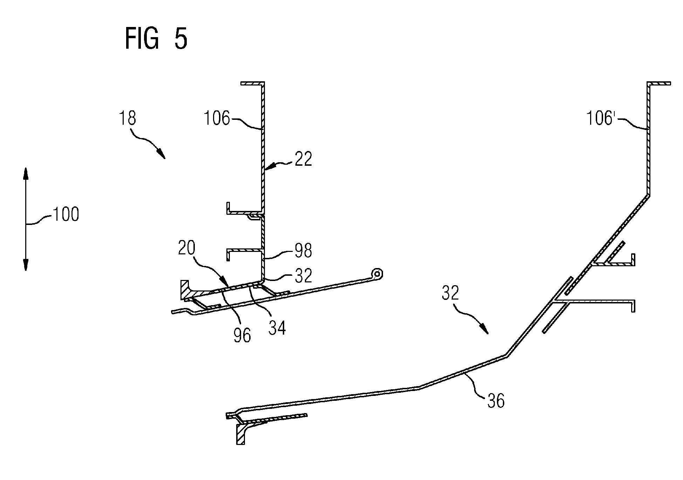

In the following step the two removable connections 26, 26' between the cone section 20 and the collector box 22 are dis-connected. In other words, the bolts of the expansion joints 32 are removed from the respective expansion joint 30. This is depicted in FIG 5.

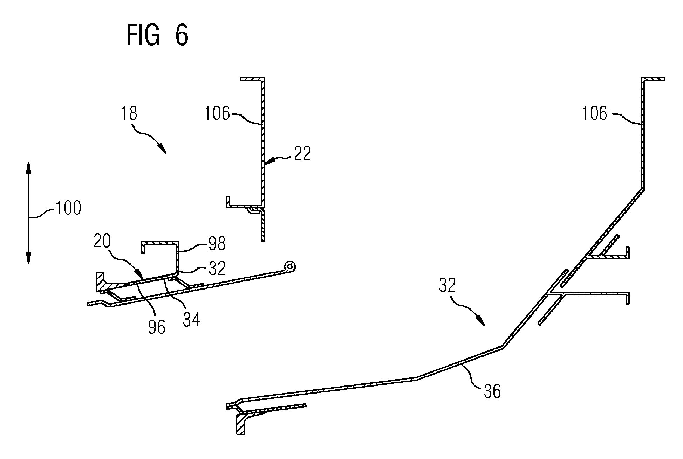

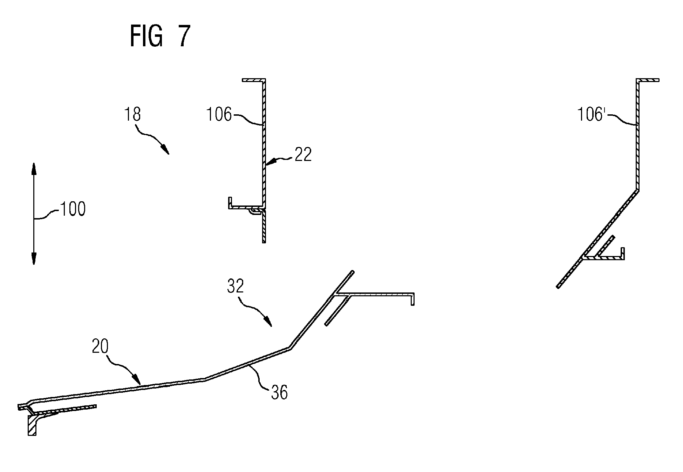

Subsequently, the dis-assembly of the exhaust arrangement 18 can be executed. First, the outer cone 34 of the cone section 20 will be removed from the connector box 22. This is shown in FIG 6. And second the inner cone 36 of the cone section 20 can be removed from the connector box 22, what is depicted in FIG 7.

An assembly process is a vice versa sequence and will be described without a specific reference to the figures.

In a first step the inner cone 36 of the cone section 20 is positioned at the connector box 22 and subsequently, the outer cone 34 of the cone section 20 is positioned at the connector box 22. In the next step the inner cone 36 and the outer cone 34 of the cone section 20 are connected to the collector box 22 by establishing the two removable connections 26, 26' between the cone section 20 and the collector box 22. In other words, the cones 34, 36 and the walls 110, 110' of the connector box 22 are bolted via the expansion joints 30.

In the subsequent step, the diffuser section 16 is positioned at the cone section 20 following by connecting the diffuser section 16 to the cone section 20 by establishing the removable connection 24 between the diffuser section 16 and the cone section 20 or by bolting the flanges 102 of the flanged joint 28.

According to an alternative, not depicted embodiment of the invention a removable connection between a diffuser section and a cone section as well as removable connections between an outer cone of the cone section and an inner cone of the cone section, respectively, and a collector box can be embodied as a V-clamp.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. Flow engine (10) comprising an outlet arrangement (12) with a diffuser arrangement (14) comprising a diffuser section (16) and with an exhaust arrangement (18) comprising a cone section (20) and a collector box (22), **characterised in that** at least two parts (16, 20, 22) of the tree parts (16, 20, 22) of the outlet arrangement (12) are connected to one another by at least one removable connections (24, 26, 26').

2. A flow engine according to claim 1, wherein the diffuser section (16) and the cone section (20) are connected to one another by at least one removable connection (24).

3. A flow engine according to claim 1 or 2, wherein the cone section (20) and the collector box (22) are connected to one another by at least two removable connections (26, 26').

4. A flow engine according to any one of the proceeding claims, wherein the at least one removable connection is a V-clamp.

5. A flow engine according to any one of the proceeding claim 1 to 3, wherein the at least one removable connection (24) is a flanged joint (28).

6. A flow engine according to claim 5, wherein the at least one removable connection (26, 26') is an expansion joint (30).

7. A flow engine according to any one of the proceeding claims, wherein the cone section (20) comprises at least a deflective segment (32) and wherein the at least one removable connection (24) connecting the cone section (20) with the diffuser section (16) is positioned upstream of the deflective segment (32).

8. A flow engine according to any one of the proceeding claims, wherein the cone section (20) comprises at least a deflective segment (32) and wherein the at least one removable connection (26, 26') connecting the cone section (20) with the collector box (22) is positioned downstream of the deflective segment (32).

9. A method for de-assembling an outlet arrangement (12) of a flow engine (10), comprising a diffuser arrangement (14) having a diffuser section (16) and an exhaust arrangement (18) having a cone section (20) and a collector box (22), characterised at least in the steps of:
- dis-connecting at least one removable connection (24) between the diffuser section (16) and the cone section (20),
- removing the diffuser section (16) from the cone section (20),
- dis-connecting at least two removable connections (26, 26') between the cone section (20) and the collector box (22),
- removing an outer cone (34) of the cone section (20) from the connector box (22) and
- removing an inner cone (36) of the cone section (20) from the connector box (22).

10. A method for assembling an outlet arrangement (12) of a flow engine (10), comprising a diffuser arrangement (14) having a diffuser section (16) and an exhaust arrangement (18) having a cone section (20) and a collector box (22), characterised at least in the steps of:
- positioning an inner cone (36) of the cone section (20) at the connector box (22),
- positioning an outer cone (34) of the cone section (20) at the connector box (22),
- connecting the inner cone (36) and the outer cone (34) of the cone section (20) to the collector box (22) by establishing at least two removable connections (26, 26') between the cone section (20) and the collector box (22),
- positioning the diffuser section (16) at the cone section (20) and
- connecting the diffuser section (16) to the cone section (20) by establishing at least one removable connection (24) between the diffuser section (16) and the cone section (20).
